# EUROPEAN PATENT APPLICATION

(11) **EP 4 181 434 A1**
(43) Date of publication of application: **17.05.2023**
(21) Application number: 21849295.7
(22) Date of filing: 08.07.2021

(54) **TRAFFIC SPEED LIMITING METHOD, RELATED NETWORK DEVICE, AND STORAGE MEDIUM**

(30) Priority: 29.07.2020 CN 202010747256
(71) Applicant: Huawei Technologies Co., Ltd., Shenzhen, Guangdong 518129 (CN)
(72) Inventor: LIU, Jun, Shenzhen, Guangdong 518129 (CN)
(74) Representative: Körber, Martin Hans
(86) International application number: PCT/CN2021/105133
(87) International publication number: WO 2022/022251

(57) **Abstract**

A traffic rate limiting method, a related network device, and a system are provided, and belong to the field of communication technologies. In the method, a third network device is multi-homed to a first network device and a second network device. The first network device may determine a restricted interface bandwidth of the first network device based on a remaining interface bandwidth of the second network device and a configured bandwidth of a second interface. Subsequently, the first network device may limit a user traffic rate based on the restricted interface bandwidth. Because the first network device and the second network device are configured to perform load balancing on user traffic, the restricted interface bandwidth that is determined by the first network device based on the remaining interface bandwidth of the second network device, in other words, based on a bandwidth occupation status of the second network device is accurate. The first network device can appropriately limit the user traffic rate based on the restricted interface bandwidth, to save network resources without affecting user experience.

## Description

Embodiments of this application claim priority to Chinese Patent Application No. 202010747256.4, filed on July 29, 2020 and entitled "TRAFFIC RATE LIMITING METHOD, RELATED NETWORK DEVICE, AND STORAGE MEDIUM", which is incorporated herein by reference in their entireties.

### TECHNICAL FIELD

Embodiments of this application relate to the field of communication technologies, and in particular, to a traffic rate limiting method, a related network device, and a storage medium.

### BACKGROUND

A virtual private network (Virtual Private Network, VPN) technology is widely used in network designs of operators. The VPN includes a plurality of provider edge (Provider Edge, PE) devices, and the plurality of PE devices are connected to each other. A customer edge (Customer Edge, CE) device may be connected to a PE device in the VPN, so that user equipment mounted to the CE device accesses the VPN.

Currently, a dual-homing active-active solution may be used to improve reliability. Specifically, a CE device is dual-homed to a PE 1 device and a PE 2 device. The PE 1 device and the PE 2 device forward user uplink traffic from the CE device to another device in a load balancing manner, and forward user downlink traffic from another device to the CE device in the load balancing manner.

However, in the foregoing dual-homing active-active solution, it is difficult to flexibly and appropriately limit a traffic rate. It is assumed that an operator provides a service traffic bandwidth that is limited to 100 megabits per second (Mbps) for a user through subscription. It is considered that the PE 1 device and the PE 2 device may perform load balancing. If rate limit values of both the PE 1 device and the PE 2 device are set to 50 Mbps, user traffic may all be forwarded on the PE 1 device side in some cases because it is difficult to ensure absolute load balancing on two sides in an actual running process of a network. That is, an actual user traffic rate is limited to 50 Mbps. As a result, normal packet transmission is affected and user experience deteriorates. However, to ensure that user experience is not lower than expected, if the rate limit values of both the PE 1 device and the PE 2 device are set to 100 Mbps, an actual rate limit peak value of the user traffic is 200 Mbps. This is not conducive to appropriate allocation of limited network resources by the operator

### SUMMARY

Embodiments of this application provide a traffic rate limiting method, a related network device, and a storage medium, to flexibly and appropriately limit a traffic rate.

According to a first aspect, a traffic rate limiting method is provided. The method is applied to a network system. The network system includes a first network device, a second network device, and a third network device. The third network device is multi-homed to the first network device and the second network device. The first network device and the second network device may be PE devices, and the third network device may be a CE device.

In the method, the first network device determines a remaining interface bandwidth of the second network device, and then determines a restricted interface bandwidth of the first network device based on the remaining interface bandwidth of the second network device and a configured bandwidth of a second interface.

The remaining interface bandwidth of the second network device is an unoccupied bandwidth in a configured bandwidth of a first interface. The first interface is an interface through which the second network device is connected to the third network device.

The first interface is an interface used by the second network device to receive uplink traffic from the third network device or send downlink traffic to the third network device. In some cases, both the uplink traffic sent by the third network device and the downlink traffic sent to the third network device may flow through the first interface, for example, a same aggregation interface. The configured bandwidth of the first interface is a bandwidth that is configured by the second network device for the first interface and that is used to forward traffic (uplink traffic or downlink traffic).

The remaining interface bandwidth of the second network device is a bandwidth that is currently in an unoccupied state and that is in the bandwidth configured by the second network device for the first interface, to be specific, a remaining bandwidth that is in the configured bandwidth of the first interface and that is temporarily not used to transmit traffic. Correspondingly, when the configured bandwidth of the first interface is for the uplink traffic, the remaining interface bandwidth of the second network device is also for the uplink traffic. When the configured bandwidth of the first interface is for the downlink traffic, the remaining interface bandwidth of the second network device is also for the downlink traffic.

The second interface is an interface used by the first network device to receive uplink traffic from the third network device or send downlink traffic to the third network device. In some cases, both the uplink traffic sent by the third network device and the downlink traffic sent to the third network device may flow through the second interface, for example, a same aggregation interface. The configured bandwidth of the second interface is a bandwidth that is configured by the first network device for the second interface and that is used to forward traffic (uplink traffic or downlink traffic).

The restricted interface bandwidth of the first network device is used to limit a rate of traffic that flows through the second interface, and may be specifically used to limit a rate of the uplink traffic or the downlink traffic that flows through the second interface. If both the remaining interface bandwidth of the second network device and the configured bandwidth of the second interface are for the uplink traffic, the determined restricted interface bandwidth of the first network device is also for the uplink traffic. To be specific, the restricted interface bandwidth of the first network device is used to limit the rate of the uplink traffic that flows through the second interface. If both the remaining interface bandwidth of the second network device and the configured bandwidth of the second interface are for the downlink traffic, the determined restricted interface bandwidth of the first network device is also for the downlink traffic. To be specific, the restricted interface bandwidth of the first network device is used to limit the rate of the downlink traffic that flows through the second interface.

Optionally, the message may be a border gateway protocol (Border Gateway Protocol, BGP) route, or may be another message that can carry bandwidth information.

In this embodiment of this application, after determining the restricted interface bandwidth of the first network device, the first network device may limit a user traffic rate based on the restricted interface bandwidth. Because the first network device and the second network device are configured to perform load balancing on user traffic, the restricted interface bandwidth that is determined by the first network device based on the remaining interface bandwidth of the second network device, in other words, based on a bandwidth occupation status of the second network device is accurate. The first network device can appropriately limit the user traffic rate based on the restricted interface bandwidth, to save network resources without affecting user experience.

In a possible implementation, an operation in which the first network device determines the remaining interface bandwidth of the second network device may be: The first network device receives a message sent by the second network device, where the message includes the configured bandwidth of the first interface and the bandwidth occupied by the traffic that flows through the first interface; and the first network device determines the remaining interface bandwidth of the second network device based on a difference between the configured bandwidth of the first interface and the bandwidth occupied by the traffic that flows through the first interface.

Optionally, there may be one message that includes both the configured bandwidth of the first interface and the bandwidth occupied by the traffic that flows through the first interface. In this case, the one message may be sent when the configured bandwidth of the first interface changes, or may be sent at a preset time interval.

Alternatively, there may be two messages that may include a first message and a second message. The first message includes the configured bandwidth of the first interface. In other words, the configured bandwidth of the first interface is sent by using the first message. The second message includes the bandwidth occupied by the traffic that flows through the first interface. In other words, the bandwidth occupied by the traffic that flows through the first interface is sent by using the second message. In this case, a sending time interval of the first message is different from a sending time interval of the second message. Alternatively, the first message is sent when the configured bandwidth of the first interface changes, and the second message is sent at a preset time interval.

In a possible implementation, an operation in which the first network device determines the remaining interface bandwidth of the second network device may be: The first network device receives a message sent by the second network device, where the message includes the remaining interface bandwidth of the second network device.

In a possible implementation, the message further includes an Ethernet segment identifier (Ethernet Segment Identifier, ESI) or an interface identifier of the first interface, and the ESI or the interface identifier indicates the first network device to determine the second interface. To be specific, after receiving the message, the first network device may determine, based on the ESI or the interface identifier that is of the first interface and that is in the message, the second interface corresponding to the first interface.

In an Ethernet virtual private network (Ethernet Virtual Private Network, EVPN) network, a first network device and a second network device that have a multi-homing relationship may have a same ESI. The first network device may determine, based on the ESI, a first interface that is in the first network device and that is used to connect to a third network device, and the second network device may determine, based on the ESI, a second interface that is in the second network device and that is used to connect to the third network device. However, in a non-EVPN network, corresponding interface identifiers may be separately allocated to a first network device and a second network device, and an interface identifier identifying a first interface is carried in a message sent by the second network device, so that the first network device determines a second interface corresponding to the interface identifier of the first interface. The interface identifier of the first interface may be the same as an interface identifier of the second interface, or the interface identifier of the first interface may have a correspondence with an interface identifier of the second interface. In this way, the first network device can subsequently set a bandwidth of the second interface based on a remaining interface bandwidth of the second network device (namely, a remaining bandwidth of the first interface).

Further, the message further includes an Ethernet tag of the first interface, and the ESI and the Ethernet tag indicate the first network device to determine the second interface. In some possible cases, the Ethernet tag may be a virtual local area network identifier (virtual local network identifier, VLAN ID). For example, the first network device may determine an aggregation interface based on the ESI, where the aggregation interface includes one or more sub-interfaces, and the first network device may determine, based on the received VLAN ID, a sub-interface of the aggregation interface as the second interface.

In a possible implementation, the message may further include traffic direction information. The traffic direction information indicates whether the configured bandwidth of the first interface and the bandwidth occupied by the traffic flowing through the first interface that are carried in the message are bandwidth information of uplink traffic that flows through the first interface or bandwidth information of downlink traffic that flows through the first interface. Alternatively, the traffic direction information indicates whether the remaining interface bandwidth carried in the message is bandwidth information of uplink traffic that flows through the first interface or bandwidth information of downlink traffic that flows through the first interface.

When the traffic direction information indicates that the message carries the bandwidth information of the uplink traffic, the remaining interface bandwidth that is of the second network device and that is determined by the first network device based on the message is also for the uplink traffic. Correspondingly, a bandwidth that is of the second interface and that is used to forward the uplink traffic is subsequently configured. When the traffic direction information indicates that the message carries the bandwidth information of the downlink traffic, the remaining interface bandwidth that is of the second network device and that is determined by the first network device based on the message is also for the downlink traffic. Correspondingly, a bandwidth that is of the second interface and that is used to forward the downlink traffic is subsequently configured.

In a possible implementation, an operation in which the first network device determines the restricted interface bandwidth of the first network device based on the remaining interface bandwidth of the second network device and the configured bandwidth of the second interface may be: The first network device determines the restricted interface bandwidth of the first network device based on a sum of the remaining interface bandwidth of the second network device and the configured bandwidth of the second interface; the first network device first obtains a sum of the remaining interface bandwidth of the second network device and the configured bandwidth of the second interface, and multiplies the sum result by a control coefficient, to determine the restricted interface bandwidth of the first network device; or may perform an operation of another preset rule based on the remaining interface bandwidth of the second network device and the configured bandwidth of the second interface to obtain the restricted interface bandwidth.

The implementation is applicable to a dual-homing active-active scenario. In the dual-homing active-active scenario, the third network device sends uplink traffic or receives downlink traffic by using the first network device and the second network device. Therefore, the first network device can directly adjust, based on the bandwidth occupation status of the second network device, bandwidth limiting configuration that takes effect in real time.

In a possible implementation, in addition to the first network device and the second network device, the third network device is further multi-homed to other N network devices, where N is a positive integer. An operation in which the first network device determines the restricted interface bandwidth of the first network device based on the remaining interface bandwidth the second network device and the configured bandwidth of the second interface may be: The first network device determines an available remaining interface bandwidth based on the remaining interface bandwidth of the second network device, one or more remaining interface bandwidths of the other N network devices, and a control coefficient. There may be one or more control coefficients, and a value of the one or more control coefficients may be all greater than 0 and less than 1. When there is one control coefficient, the first network device may determine that one or more remaining interface bandwidths of one or more other network devices are all corresponding to the control coefficient. When there are a plurality of control coefficients, the first network device may determine that a plurality of remaining interface bandwidths of a plurality of other network devices are respectively corresponding to the plurality of control coefficients. The first network device determines the restricted interface bandwidth of the first network device based on the available remaining interface bandwidth and the configured bandwidth of the second interface.

The implementation is applicable to a multi-homing all-active scenario. In the multi-homing all-active scenario, the third network device sends uplink traffic or receives downlink traffic by performing load balancing by using the first network device, the second network device, and the other N network devices. Therefore, the first network device may need to adjust, based on the bandwidth occupation status of the second network device and bandwidth occupation statuses of the N network devices, bandwidth limiting configuration that takes effect in real time.

According to a second aspect, a first network device is provided. The first network device is applied to a network system, the network system includes the first network device, a second network device, and a third network device, and the third network device is multi-homed to the first network device and the second network device. The first network device has a function of implementing behavior of the traffic rate limiting method according to any one of the first aspect or the implementations of the first aspect. The first network device includes at least one module, and the at least one module is configured to implement the traffic rate limiting method according to the first aspect.

In a possible implementation, the first network device includes a first determining module and a second determining module. The first determining module is configured to determine a remaining interface bandwidth of the second network device, where the remaining interface bandwidth of the second network device is an unoccupied bandwidth in a configured bandwidth of a first interface, and the first interface is an interface through which the second network device is connected to the third network device. The second determining module is configured to determine a restricted interface bandwidth of the first network device based on the remaining interface bandwidth of the second network device and a configured bandwidth of a second interface, where the restricted interface bandwidth is used to limit a rate of traffic that flows through the second interface, and the second interface is an interface through which the first network device is connected to the third network device.

In a possible implementation, the first determining module is configured to: receive a message sent by the second network device, where the message includes the configured bandwidth of the first interface and a bandwidth occupied by traffic that flows through the first interface; and determine the remaining interface bandwidth of the second network device based on a difference between the configured bandwidth of the first interface and the bandwidth occupied by the traffic that flows through the first interface.

In a possible implementation, the first determining module is configured to receive a message sent by the second network device, where the message includes the remaining interface bandwidth of the second network device.

In a possible implementation, the message further includes an Ethernet segment identifier ESI or an interface identifier of the first interface, and the ESI or the interface identifier indicates the first network device to determine the second interface.

In a possible implementation, the message further includes an Ethernet tag of the first interface, and the ESI and the Ethernet tag indicate the first network device to determine the second interface.

In a possible implementation, the message is a border gateway protocol BGP route.

In a possible implementation, the message includes a first message and a second message, the configured bandwidth of the first interface is sent by using the first message, and the bandwidth occupied by the traffic that flows through the first interface is sent by using the second message.

In a possible implementation, a sending time interval of the first message is different from a sending time interval of the second message. Alternatively, the first message is sent when the configured bandwidth of the first interface changes, and the second message is sent at a preset time interval.

In a possible implementation, the second determining module is configured to determine the restricted interface bandwidth of the first network device based on a sum of the remaining interface bandwidth of the second network device and the configured bandwidth of the second interface.

In a possible implementation, in addition to the first network device and the second network device, the third network device is further multi-homed to other N network devices, where N is a positive integer.

The second determining module is configured to: determine an available remaining interface bandwidth based on the remaining interface bandwidth of the second network device, one or more remaining interface bandwidths of the other N network devices, and a control coefficient, where the control coefficient may be greater than 0 and less than 1, or may be another value; and determine the restricted interface bandwidth of the first network device based on the available remaining interface bandwidth and the configured bandwidth of the second interface.

In a possible implementation, the restricted interface bandwidth is used to limit a rate of uplink traffic or downlink traffic that flows through the second interface.

In a possible implementation, the message further includes traffic direction information. The traffic direction information indicates whether the configured bandwidth of the first interface and the bandwidth occupied by the traffic flowing through the first interface that are carried in the message are bandwidth information of uplink traffic that flows through the first interface or bandwidth information of downlink traffic that flows through the first interface. Alternatively, the traffic direction information indicates whether the remaining interface bandwidth carried in the message is bandwidth information of uplink traffic that flows through the first interface or bandwidth information of downlink traffic that flows through the first interface.

According to a third aspect, a first network device is provided. A structure of the first network device includes a processor and a memory. The memory is configured to store a program that supports the first network device in performing the traffic rate limiting method according to any one of the first aspect or the possible implementations of the first aspect, and store data used to implement the traffic rate limiting method according to the first aspect. The processor is configured to execute the program stored in the memory, to implement the method according to any one of the first aspect or the possible implementations of the first aspect. The first network device may further include a transceiver, and the transceiver is configured to receive and/or send the data in any one of the first aspect or the possible implementations of the first aspect.

According to a fourth aspect, a computer-readable storage medium is provided. The computer-readable storage medium stores instructions. When the instructions are run on a computer, the computer is enabled to perform the traffic rate limiting method according to any one of the first aspect or the possible implementations of the first aspect.

According to a fifth aspect, a computer program product including instructions is provided. When the computer program product is run on a computer, the computer is enabled to perform the traffic rate limiting method according to any one of the first aspect or the possible implementations of the first aspect.

Technical effects obtained in the second aspect, the third aspect, the fourth aspect, and the fifth aspect are similar to the technical effects obtained by using corresponding technical means in the first aspect. Details are not described herein again.

According to a sixth aspect, a traffic rate limiting method is provided. The method is applied to a network system. The network system includes a first network device, a second network device, and a third network device. The third network device is multi-homed to the first network device and the second network device. In the method, the second network device determines a configured bandwidth of a first interface and a bandwidth occupied by the traffic that flows through the first interface, and then sends a message to the first network device based on the configured bandwidth of the first interface and the bandwidth occupied by the traffic that flows through the first interface, where the message indicates the first network device to limit a traffic rate of the third network device based on the message.

The first interface is an interface through which the second network device is connected to the third network device. The first interface is an interface used by the second network device to receive uplink traffic from the third network device or send downlink traffic to the third network device. In some cases, both the uplink traffic sent by the third network device and the downlink traffic sent to the third network device may flow through the first interface, for example, a same aggregation interface. The configured bandwidth of the first interface is a bandwidth that is configured by the second network device for the first interface and that is used to forward traffic (uplink traffic or downlink traffic).

The message includes the configured bandwidth of the first interface and the bandwidth occupied by the traffic that flows through the first interface. Alternatively, the message includes a remaining interface bandwidth of the second network device.

The remaining interface bandwidth of the second network device is an unoccupied bandwidth in the configured bandwidth of the first interface. The remaining interface bandwidth of the second network device is a bandwidth that is currently in an unoccupied state and that is in the bandwidth configured by the second network device for the first interface, to be specific, a remaining bandwidth that is in the configured bandwidth of the first interface and that is temporarily not used to transmit traffic. Correspondingly, when the configured bandwidth of the first interface is for the uplink traffic, the remaining interface bandwidth of the second network device is also for the uplink traffic. When the configured bandwidth of the first interface is for the downlink traffic, the remaining interface bandwidth of the second network device is also for the downlink traffic.

When the message includes the configured bandwidth of the first interface and the bandwidth occupied by the traffic that flows through the first interface, there may be one message, and the one message includes both the configured bandwidth of the first interface and the bandwidth occupied by the traffic that flows through the first interface. In this case, the one message may be sent when the configured bandwidth of the first interface changes, or may be sent at a preset time interval. The preset time interval may be set by the second network device, may be set to a long time interval or a short time interval, and may be specifically set as required. Alternatively, there may be two messages that may include a first message and a second message. The first message includes the configured bandwidth of the first interface. In other words, the configured bandwidth of the first interface is sent by using the first message. The second message includes the bandwidth occupied by the traffic that flows through the first interface. In other words, the bandwidth occupied by the traffic that flows through the first interface is sent by using the second message. In this case, a sending time interval of the first message is different from a sending time interval of the second message. Alternatively, the first message is sent when the configured bandwidth of the first interface changes, and the second message is sent at a preset time interval.

When the message includes the remaining interface bandwidth of the second network device, the second network device may subtract, from the configured bandwidth of the first interface, the bandwidth occupied by the traffic that flows through the first interface, to obtain the remaining interface bandwidth of the second network device.

Optionally, the message may be a border gateway protocol BGP route, or may be another message that can carry bandwidth information.

In this embodiment of this application, the second network device may send the configured bandwidth of the first interface and the bandwidth occupied by the traffic that flows through the first interface to the first network device, or may send the remaining interface bandwidth of the second network device to the first network device. Therefore, the first network device can learn of a bandwidth occupation status of the second network device. Because the first network device and the second network device are configured to perform load balancing on user traffic, the first network device can appropriately limit a user traffic rate of the third network device based on the bandwidth occupation status of the second network device, to ensure that network resources are saved without affecting user experience.

In a possible implementation, the message further includes an Ethernet segment identifier ESI or an interface identifier of the first interface, and the ESI or the interface identifier indicates the first network device to determine a second interface.

The second interface is an interface through which the first network device is connected to the third network device. The second interface is an interface used by the first network device to receive uplink traffic from the third network device or send downlink traffic to the third network device. In some cases, both the uplink traffic sent by the third network device and the downlink traffic sent to the third network device may flow through the second interface, for example, a same aggregation interface.

In an EVPN, a first network device and a second network device that have a multi-homing relationship may have a same ESI. The first network device may determine, based on the ESI, a first interface that is in the first network device and that is used to connect to a third network device, and the second network device may determine, based on the ESI, a second interface that is in the second network device and that is used to connect to the third network device. However, in a non-EVPN network, corresponding interface identifiers may be separately allocated to a first network device and a second network device, and an interface identifier identifying a first interface is carried in a message sent by the second network device, so that the first network device determines a second interface corresponding to the interface identifier of the first interface. The interface identifier of the first interface may be the same as an interface identifier of the second interface, or the interface identifier of the first interface may have a correspondence with an interface identifier of the second interface. In this way, the first network device can subsequently set a bandwidth of the second interface based on a remaining interface bandwidth of the second network device (namely, a remaining bandwidth of the first interface).

Further, the message further includes an Ethernet tag of the first interface, and the ESI and the Ethernet tag indicate the first network device to determine the second interface. In some possible cases, the Ethernet tag may be a VLAN ID. For example, the first network device may determine an aggregation interface based on the ESI, where the aggregation interface includes one or more sub-interfaces, and the first network device may determine, based on the received VLAN ID, a sub-interface of the aggregation interface as the second interface.

In a possible implementation, the message may further include traffic direction information. The traffic direction information indicates whether the configured bandwidth of the first interface and the bandwidth occupied by the traffic flowing through the first interface that are carried in the message are bandwidth information of uplink traffic that flows through the first interface or bandwidth information of downlink traffic that flows through the first interface. Alternatively, the traffic direction information indicates whether the remaining interface bandwidth carried in the message is bandwidth information of uplink traffic that flows through the first interface or bandwidth information of downlink traffic that flows through the first interface.

When the traffic direction information indicates that the message carries the bandwidth information of the uplink traffic, the remaining interface bandwidth that is of the second network device and that is determined by the first network device based on the message is also for the uplink traffic. Correspondingly, a bandwidth that is of the second interface and that is used to forward the uplink traffic is subsequently configured. When the traffic direction information indicates that the message carries the bandwidth information of the downlink traffic, the remaining interface bandwidth that is of the second network device and that is determined by the first network device based on the message is also for the downlink traffic. Correspondingly, a bandwidth that is of the second interface and that is used to forward the downlink traffic is subsequently configured.

According to a seventh aspect, a second network device is provided. The second network device is applied to a network system, the network system includes a first network device, the second network device, and a third network device, and the third network device is multi-homed to the first network device and the second network device. The second network device has a function of implementing behavior of the traffic rate limiting method according to any one of the sixth aspect or the possible implementations of the sixth aspect. The second network device includes at least one module, and the at least one module is configured to implement the traffic rate limiting method according to the sixth aspect.

In a possible implementation, the second network device includes a first determining module and a sending module. The first determining module is configured to determine a configured bandwidth of a first interface and a bandwidth occupied by traffic that flows through the first interface, where the first interface is an interface through which the second network device is connected to the third network device. The sending module is configured to send a message to the first network device based on the configured bandwidth of the first interface and the bandwidth occupied by the traffic that flows through the first interface, where the message indicates the first network device to limit a traffic rate of the third network device based on the message. The message includes the configured bandwidth of the first interface and the bandwidth occupied by the traffic that flows through the first interface. Alternatively, the message includes a remaining interface bandwidth of the second network device, and the remaining interface bandwidth of the second network device is an unoccupied bandwidth in the configured bandwidth of the first interface.

In a possible implementation, the message further includes an Ethernet segment identifier ESI or an interface identifier of the first interface, the ESI or the interface identifier indicates the first network device to determine a second interface, and the second interface is an interface through which the first network device is connected to the third network device.

In a possible implementation, the message further includes an Ethernet tag of the first interface, and the ESI and the Ethernet tag indicate the first network device to determine the second interface.

In a possible implementation, the message further includes traffic direction information. The traffic direction information indicates whether the configured bandwidth of the first interface and the bandwidth occupied by the traffic flowing through the first interface that are carried in the message are bandwidth information of uplink traffic that flows through the first interface or bandwidth information of downlink traffic that flows through the first interface. Alternatively, the traffic direction information indicates whether the remaining interface bandwidth carried in the message is bandwidth information of uplink traffic that flows through the first interface or bandwidth information of downlink traffic that flows through the first interface.

In a possible implementation, the message is a border gateway protocol BGP route.

In a possible implementation, the message includes a first message and a second message, the configured bandwidth of the first interface is sent by using the first message, and the bandwidth occupied by the traffic that flows through the first interface is sent by using the second message.

In a possible implementation, a sending time interval of the first message is different from a sending time interval of the second message. Alternatively, the first message is sent when the configured bandwidth of the first interface changes, and the second message is sent at a preset time interval.

According to an eighth aspect, a second network device is provided. A structure of the second network device includes a processor and a memory. The memory is configured to store a program that supports the second network device in performing the traffic rate limiting method according to any one of the sixth aspect or the possible implementations of the sixth aspect, and store data used to implement the traffic rate limiting method according to the sixth aspect. The processor is configured to execute the program stored in the memory, to perform the method according to any one of the sixth aspect or the possible implementations of the sixth aspect. The second network device may further include a transceiver, and the transceiver is configured to receive and/or send the data according to any one of the sixth aspect or the possible implementations of the sixth aspect.

According to a ninth aspect, a computer-readable storage medium is provided. The computer-readable storage medium stores instructions. When the instructions are run on a computer, the computer is enabled to perform the traffic rate limiting method according to any one of the sixth aspect or the possible implementations of the sixth aspect.

According to a tenth aspect, a computer program product including instructions is provided. When the computer program product is run on a computer, the computer is enabled to perform the traffic rate limiting method according to any one of the sixth aspect or the possible implementations of the sixth aspect.

Technical effects obtained in the seventh aspect, the eighth aspect, the ninth aspect, and the tenth aspect are similar to the technical effects obtained by using corresponding technical means in the sixth aspect. Details are not described herein again.

### BRIEF DESCRIPTION OF DRAWINGS

FIG. 1 is a schematic diagram of a network system according to an embodiment of this application;
FIG. 2 is a flowchart of a first traffic rate limiting method according to an embodiment of this application;
FIG. 3 is a flowchart of a second traffic rate limiting method according to an embodiment of this application;
FIG. 4 is a flowchart of a third traffic rate limiting method according to an embodiment of this application;
FIG. 5 is a schematic diagram of a structure of a network device according to an embodiment of this application;
FIG. 6 is a schematic diagram of a structure of a first network device according to an embodiment of this application; and
FIG. 7 is a schematic diagram of a structure of a second network device according to an embodiment of this application.

### DESCRIPTION OF EMBODIMENTS

To make objectives, technical solutions, and advantages of embodiments of this application clearer, the following further describes implementations of this application in detail with reference to the accompanying drawings.

It should be understood that "a plurality of" mentioned in embodiments of this application means two or more. In the descriptions of embodiments of this application, "/" means "or" unless otherwise specified. For example, A/B may represent A or B. In this specification, "and/or" describes only an association relationship between associated objects and represents that three relationships may exist. For example, A and/or B may represent the following three cases: Only A exists, both A and B exist, and only B exists. In addition, to clearly describe the technical solutions in embodiments of this application, terms such as "first" and " second" are used to distinguish between same objects or similar objects whose functions and purposes are basically the same. A person skilled in the art may understand that the terms such as "first" and "second" do not limit a quantity or an execution sequence, and the terms such as "first" and "second" do not indicate a definite difference.

Before embodiments of this application are described in detail, an application scenario related to embodiments of this application is described.

A network system in embodiments of this application includes a first network device, a second network device, and a third network device. The third network device is multi-homed to the first network device and the second network device. Certainly, in addition to the first network device and the second network device, the third network device may further be multi-homed to other N network devices, where N is a positive integer. The third network device may receive traffic by using the first network device and the second network device, or may send traffic by using the first network device and the second network device.

A direction from the third network device to a remote network device through the first network device is an uplink direction, and a direction from the third network device to the remote network device through the second network device is also an uplink direction. Traffic in the uplink direction is referred to as uplink traffic. The uplink traffic may be, for example, traffic from user equipment mounted to the third network device, may be traffic from the third network device, or may be traffic from another network device connected to the third network device or user equipment mounted to the another network device. In some cases, the uplink traffic may alternatively be sent, through the first network device, to a network device directly connected to the first network device, or sent, through the second network device, to a network device directly connected to the second network device.

A direction from a remote network device to the third network device through the first network device is a downlink direction, and a direction from the remote network device to the third network device through the second network device is also a downlink direction. Traffic in the downlink direction is referred to as downlink traffic. The downlink traffic may be, for example, traffic sent by remote user equipment or another remote network device to the third network device. After being received by the third network device, the traffic may be forwarded to user equipment or a network device connected to the third network device, or may be locally processed and stored. In some cases, the downlink traffic may alternatively be sent by a network device directly connected to the first network device or the second network device.

Both the first network device and the second network device may be devices having data forwarding functions, for example, may be PE devices, and may be specifically switches, routers, or the like. The third network device may be a device having a data forwarding function, or may be a user-side network device, for example, may be a CE device. Device types of the first network device, the second network device, and the third network device may be the same or different.

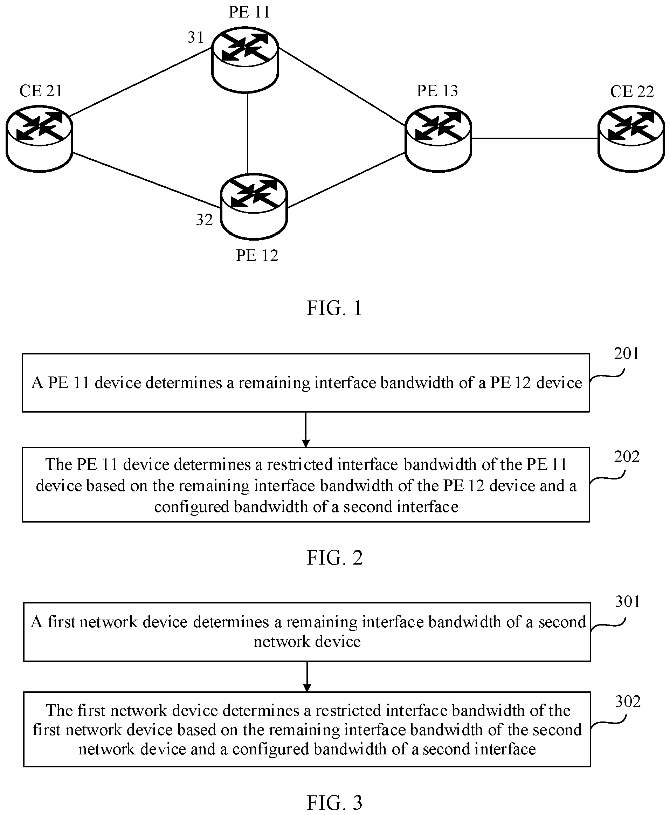

FIG. 1 is a schematic diagram of a network system according to an embodiment of this application. An example in which a third network device is a CE 21 device, a first network device is a PE 11 device, and a second network device is a PE 12 device is used for description. The network system may be established by using the interior gateway protocol (Interior Gateway Protocol, IGP), a multiprotocol label switching (Multiprotocol Label Switching, MPLS) technology, or the border gateway protocol (Border Gateway Protocol, BGP), so that routes between the CE 21 device, the PE 11 device, and the PE 12 device are reachable.

The network system shown in FIG. 1 may be used as an application scenario of embodiments of this application. Refer to FIG. 1. The network system includes the CE 21 device, the PE 11 device, and the PE 12 device. In other words, the CE 21 device is dual-homed to the PE 11 device and the PE 12 device. The PE 11 device and the PE 12 device are BGP peer devices of each other. The network system further includes a PE 13 device, and the PE 13 device is a remote BGP peer device of the PE 11 device and the PE 12 device. Another CE device (a CE 22 device shown in FIG. 1) may be connected to the PE 13 device.

An interface through which the PE 11 device is connected to the CE 21 is an interface 31. The interface 31 is an interface used by the PE 11 device to receive uplink traffic from the CE 21 device or send downlink traffic to the CE 21 device. In some cases, both the uplink traffic sent by the CE 21 device and the downlink traffic sent to the CE 21 device may flow through the interface 31, for example, a same aggregation interface. In some other cases, the uplink traffic and the downlink traffic may alternatively flow through different interfaces, for example, different aggregation interfaces or different sub-interfaces of a same aggregation interface. An interface through which the PE 12 device is connected to the CE 21 device is an interface 32. The interface 32 is an interface used by the PE 12 device to receive uplink traffic from the CE 21 device or send downlink traffic to the CE 21 device. In some cases, both the uplink traffic sent by the CE 21 device and the downlink traffic sent to the CE 21 device may flow through the interface 32.

Currently, in a dual-homing active-active scenario, for uplink traffic sent by the CE 21 device to the CE 22 device, the PE 11 device and the PE 12 device forward the uplink traffic from the CE 21 device to the CE 22 device in a load balancing manner. Specifically, the PE 11 device may forward the uplink traffic from the CE 21 device to the CE 22 device through the interface 31. The PE 12 device may forward the uplink traffic from the CE 21 device to the CE 22 device through the interface 32. For downlink traffic sent by the CE 22 device to user equipment of the CE 21 device, the PE 11 device and the PE 12 device forward the downlink traffic from the CE 22 device to the CE 21 device in the load balancing manner. Specifically, the PE 11 device may forward the downlink traffic from the CE 22 device to the CE 21 device through the interface 31. The PE 12 device may forward the downlink traffic from the CE 22 device to the CE 21 device through the interface 32.

To ensure that network resources are appropriately allocated and used without affecting user experience as much as possible, embodiments of this application provide a traffic rate limiting method. The corresponding method may be applied to the network system shown in FIG. 1, to resolve a problem that a traffic rate cannot be flexibly limited.

FIG. 2 is a flowchart of a traffic rate limiting method according to an embodiment of this application. The method may be applied to the network system shown in FIG. 1. Refer to FIG. 2. The method includes the following steps.

201: A PE 11 device determines a remaining interface bandwidth of a PE 12 device.

The remaining interface bandwidth of the PE 12 device is an unoccupied bandwidth in a configured bandwidth of a first interface. The first interface is an interface through which the PE 12 device is connected to a CE 21 device, for example, the interface 32 shown in FIG. 1.

The first interface is an interface used by the PE 12 device to receive uplink traffic from the CE 21 device or send downlink traffic to the CE 21 device. In some cases, both the uplink traffic sent by the CE 21 device and the downlink traffic sent to the CE 21 device may flow through the first interface, for example, a same aggregation interface.

The configured bandwidth of the first interface is a bandwidth that is configured by the PE 12 device for the first interface and that is used to forward traffic (uplink traffic or downlink traffic). The configured bandwidth of the first interface may be locally and statically configured by the PE 12 device, or may be configured by another network device such as a controller and then delivered to the PE 12 device. This is not uniquely limited in this embodiment of this application.

The remaining interface bandwidth of the PE 12 device is a bandwidth that is currently in an unoccupied state and that is in the bandwidth configured by the PE 12 device for the first interface, to be specific, a remaining bandwidth that is in the configured bandwidth of the first interface and that is temporarily not used to transmit traffic. Correspondingly, when the configured bandwidth of the first interface is for the uplink traffic, the remaining interface bandwidth of the PE 12 device is also for the uplink traffic. When the configured bandwidth of the first interface is for the downlink traffic, the remaining interface bandwidth of the PE 12 device is also for the downlink traffic.

Specifically, an operation of 201 may include the following two possible manners:
In a first possible manner, the PE 11 device receives a message sent by the PE 12 device, where the message includes the configured bandwidth of the first interface and a bandwidth occupied by traffic that flows through the first interface. The PE 11 device determines the remaining interface bandwidth of the PE 12 device based on a difference between the configured bandwidth of the first interface and the bandwidth occupied by the traffic that flows through the first interface.

When determining the remaining interface bandwidth of the PE 12 device based on the difference between the configured bandwidth of the first interface and the bandwidth occupied by the traffic that flows through the first interface, the PE 11 device may directly use the difference between the configured bandwidth of the first interface and the bandwidth occupied by the traffic that flows through the first interface as the remaining interface bandwidth of the PE 12 device. Alternatively, with reference to a specific rate limiting requirement or scenario requirement, the PE 11 device may multiply the difference between the configured bandwidth of the first interface and the bandwidth occupied by the traffic that flows through the first interface by k, to obtain the remaining interface bandwidth of the PE 12 device. A value range of k is usually greater than 0 and less than 1. However, in some possible cases, k may alternatively be set to another value range. k may be a fixed value statically configured by the PE 11 device, or may be a value that is allowed to be flexibly adjusted in real time according to a specific rule. This is not uniquely limited in this embodiment of this application.

Optionally, there may be one message that includes both the configured bandwidth of the first interface and the bandwidth occupied by the traffic that flows through the first interface. In this case, the one message may be sent when the configured bandwidth of the first interface changes, or may be sent at a preset time interval. The preset time interval may be set by the PE 12 device, may be set to a long time interval or a short time interval, and may be specifically set as required.

Alternatively, there may be two messages that may include a first message and a second message. The first message includes the configured bandwidth of the first interface. In other words, the configured bandwidth of the first interface is sent by using the first message. The second message includes the bandwidth occupied by the traffic that flows through the first interface. In other words, the bandwidth occupied by the traffic that flows through the first interface is sent by using the second message. In this case, a sending time interval of the first message is different from a sending time interval of the second message. Alternatively, the first message is sent when the configured bandwidth of the first interface changes, and the second message is sent at a preset time interval.

In the first possible manner, the PE 12 device determines the configured bandwidth of the first interface and the bandwidth occupied by the traffic that flows through the first interface, and then sends the message to the PE 11 device based on the obtained configured bandwidth of the first interface and the obtained bandwidth occupied by the traffic that flows through the first interface. The message includes the configured bandwidth of the first interface and the bandwidth occupied by the traffic that flows through the first interface, and indicates the PE 11 device to limit a traffic rate of the CE 21 device based on the message.

In a second possible manner, the PE 11 device receives a message sent by the PE 12 device, where the message includes the remaining interface bandwidth of the PE 12 device.

In the second possible manner, the PE 12 device determines the configured bandwidth of the first interface and a bandwidth occupied by traffic that flows through the first interface, then directly determines the remaining interface bandwidth of the PE 12 device based on the configured bandwidth of the first interface and the bandwidth occupied by the traffic that flows through the first interface, and includes the remaining interface bandwidth in a message and sends the message to the PE 11 device. The remaining interface bandwidth included in the message indicates the PE 11 device to limit a traffic rate of the CE 21 device based on the message. In this manner, the PE 12 device may subtract, from the configured bandwidth of the first interface, the bandwidth occupied by the traffic that flows through the first interface, to obtain the remaining interface bandwidth of the PE 12 device.

In the foregoing two possible manners, when sending a message to the PE 11 device, the PE 12 device may directly send the message to the PE 11 device, or may send the message to the PE 11 device by using another network device such as a route reflector (Route Reflector, RR). This is not uniquely limited in this embodiment of this application.

In the foregoing two possible manners, the message may further include an Ethernet segment identifier (Ethernet Segment Identifier, ESI) or an interface identifier of the first interface. The interface identifier identifies the first interface, and may be locally and statically configured by the PE 12 device, or may be configured by the controller or the like and then delivered to the PE 12 device. This is not uniquely limited in this embodiment of this application.

The ESI or the interface identifier of the first interface indicates the PE 11 device to determine a second interface. The second interface is an interface through which the PE 11 device is connected to the CE 21 device, for example, the interface 31 shown in FIG. 1. The second interface is an interface used by the PE 11 device to receive uplink traffic from the CE 21 device or send downlink traffic to the CE 21 device. In some cases, both the uplink traffic sent by the CE 21 device and the downlink traffic sent to the CE 21 device may flow through the second interface, for example, a same aggregation interface.

To be specific, after receiving the message, the PE 11 device may determine, based on the ESI or the interface identifier that is of the first interface and that is in the message, the second interface corresponding to the first interface. Specifically, in an Ethernet virtual private network (Ethernet Virtual Private Network, EVPN), a PE 11 device and a PE 12 device that have a multi-homing relationship may have a same ESI. The PE 11 device may determine, based on the ESI, a first interface that is in the PE 11 device and that is used to connect to a CE 21 device. The PE 12 device may determine, based on the ESI, a second interface that is in the PE 12 device and that is used to connect to the CE 21 device. However, in a non-EVPN network, corresponding interface identifiers may be separately allocated to a PE 11 device and a PE 12 device, and an interface identifier identifying a first interface is carried in a message sent by the PE 12 device, so that the PE 11 device determines a second interface corresponding to the interface identifier of the first interface. The interface identifier of the first interface may be the same as an interface identifier of the second interface, or the interface identifier of the first interface may have a correspondence with an interface identifier of the second interface. In this way, the PE 11 device can subsequently set a bandwidth of the second interface based on a remaining interface bandwidth of the PE 12 device (namely, a remaining bandwidth of the first interface).

The first interface and the second interface correspond to each other, and both the first interface and the second interface are configured to forward the uplink traffic sent by the CE 21 device or forward the downlink traffic sent to the CE 21 device.

In the EVPN, the message in the foregoing two possible manners may further include an Ethernet tag (Ethernet tag) of the first interface, and the ESI of the first interface and the Ethernet tag jointly indicate the PE 11 device to determine the second interface. In some possible cases, the Ethernet tag may be a virtual local area network identifier (virtual local network identifier, VLAN ID). In a possible example, the PE 11 device may determine an aggregation interface based on the ESI, where the aggregation interface includes one or more sub-interfaces, and the PE 11 device may determine, based on the received VLAN ID, a sub-interface of the aggregation interface as the second interface. In a possible specific implementation, when the first interface corresponds to a unique VLAN, the VLAN ID may be an identifier of the unique VLAN determined by the PE 12 device. When the first interface corresponds to a plurality of VLANs, the VLAN ID may be an identifier of one of the VLANs (for example, a VLAN with a maximum or minimum identifier value in the plurality of VLANs) determined by the PE 12 device from the plurality of VLANs.

In the non-EVPN, the message in the foregoing two possible manners may further include a VLAN identifier corresponding to the first interface, where a manner of determining the VLAN identifier is similar to the foregoing manner of determining the VLAN ID in the EVPN. After receiving the VLAN identifier and the interface identifier that are of the first interface and that are sent by the PE 12 device, the PE 11 device may determine, based on the interface identifier and the VLAN identifier that are of the first interface, the second interface corresponding to the first interface. When the PE 12 device does not send the VLAN identifier, for example, a corresponding interface may be uniquely determined by using only the interface identifier in a static configuration manner. When the PE 12 device further sends the VLAN identifier in addition to the interface identifier, interfaces belonging to different VLANs may be allowed to have a same interface identifier. In this case, a corresponding interface needs to be determined by using the interface identifier and the VLAN identifier together.

Optionally, in the foregoing two possible manners, the message may further include traffic direction information. The traffic direction information indicates whether the configured bandwidth of the first interface and the bandwidth occupied by the traffic flowing through the first interface that are carried in the message are bandwidth information of uplink traffic that flows through the first interface or bandwidth information of downlink traffic that flows through the first interface. Alternatively, the traffic direction information indicates whether the remaining interface bandwidth carried in the message is bandwidth information of uplink traffic that flows through the first interface or bandwidth information of downlink traffic that flows through the first interface.

When the traffic direction information indicates that the message carries the bandwidth information of the uplink traffic, the remaining interface bandwidth that is of the PE 12 device and that is determined by the PE 11 device based on the message is also for the uplink traffic. Correspondingly, a bandwidth that is of the second interface and that is used to forward the uplink traffic is subsequently configured. When the traffic direction information indicates that the message carries the bandwidth information of the downlink traffic, the remaining interface bandwidth that is of the PE 12 device and that is determined by the PE 11 device based on the message is also for the downlink traffic. Correspondingly, a bandwidth that is of the second interface and that is used to forward the downlink traffic is subsequently configured.

The message in the foregoing two possible manners may be a BGP route, or may be another message that can carry bandwidth information. This is not uniquely limited in this embodiment of this application.

In this embodiment of this application, the bandwidth information (the configured bandwidth of the first interface, the bandwidth occupied by the traffic that flows through the first interface, or the remaining interface bandwidth of the PE 12 device) may be carried by adding a new BGP route type or adding a new extended community (extended community) attribute.

Optionally, in a scenario such as the EVPN, the bandwidth information may exist in a network layer reachability information (network layer reachability information, NLRI) attribute in the BGP route. For example, fields included in the NLRI attribute may be shown in Table 1.

**Table 1**

| Type (1 byte) |
|---|
| Length (1 byte) |
| Route Distinguisher (8 bytes) |
| Ethernet Segment Identifier (10 bytes) |
| Ethernet Tag (4 bytes) |
| Bandwidth_type (4 bits) |
| Bandwidth_direction (4 bits) |

| Bandwidth (6 bytes) |
|---|
| Originating Router's IP Address (4 or 16 bytes) |

The Type field indicates a BGP route type. The Length field indicates a length of the NLRI attribute. The Route Distinguisher field is used to distinguish between BGP routes of different virtual local area networks (virtual local area networks, VLANs). The Ethernet Segment Identifier field is an ESI of an interface. The Ethernet Tag field is an Ethernet tag of the interface. The Bandwidth_direction field is traffic direction information, and indicates whether a message carries bandwidth information of uplink traffic or bandwidth information of downlink traffic. The Bandwidth_type field may include three bandwidth types: a configured bandwidth type, a traffic-occupied bandwidth type, and a remaining bandwidth type. The Bandwidth field indicates a bandwidth value of the interface. The Originating Router's IP Address field is a source address, for example, an IP address of the PE 12 device, configured on a network device that sends a message.

In this embodiment of this application, Table 1 is only used as an example to describe the NLRI attribute, and Table 1 does not constitute a unique limitation on this embodiment of this application.

Optionally, the bandwidth information may alternatively exist in an extended community attribute of the BGP route, for example, may be used in the non-EVPN network scenario. For example, fields included in the extended community attribute may be shown in Table 2.

**Table 2**

| Extend-community type | Extend-community sub-type | Bandwidth identifier | | | |
|---|---|---|---|---|---|
| | | Bandwidth_id | | | |
| Outer vlan | | Inner vlan | | | |
| Bandwidth | | C | A | I | O |

The Extend-Community type field indicates a type of a newly defined extended community attribute. The Extend-Community sub-type field indicates a sub-type of the newly defined extended community attribute. The Extend-Community type field and the Extend-Community sub-type field indicate that a message carries information used for bandwidth adjustment. The Bandwidth_id field indicates an interface identifier. The Outer vlan field and the Inner vlan field include a VLAN identifier. The Bandwidth field indicates a bandwidth value of an interface. A C/A/I/O flag bit is set for different bandwidth types. C: The C flag bit is set to 1, indicating a configured bandwidth type. A: The A flag bit is set to 1, indicating a traffic-occupied bandwidth type. I: The I flag bit is set to 1, indicating bandwidth information of downlink traffic. O: The O flag bit is set to 1, indicating bandwidth information of uplink traffic.

In Table 2, an example in which a message carries a configured bandwidth and a traffic-occupied bandwidth is used. A message carrying format of another style may further be designed with reference to a scenario. For example, when the message carries a remaining bandwidth, the C/A flag bit in Table 2 may be changed to an F flag bit, and the F bit is set to 1, indicating that a value carried in a Bandwidth field is a value of the remaining bandwidth. If the message can carry the configured bandwidth and the traffic-occupied bandwidth, and the message can carry the remaining bandwidth, a C/A/I/O/F flag bit can be set at the same time.

In this embodiment of this application, Table 2 is only used as an example to describe the extended community attribute, and Table 2 does not constitute a unique limitation on this embodiment of this application.

202: The PE 11 device determines a restricted interface bandwidth of the PE 11 device based on the remaining interface bandwidth of the PE 12 device and a configured bandwidth of the second interface.

The configured bandwidth of the second interface is a bandwidth that is configured by the PE 11 device for the second interface and that is used to forward traffic (uplink traffic or downlink traffic). The configured bandwidth of the second interface may be locally and statically configured by the PE 11 device, or may be configured by another network device such as the controller and then delivered to the PE 11 device.

The restricted interface bandwidth of the PE 11 device is used to limit a rate of traffic that flows through the second interface, and may be specifically used to limit a rate of uplink traffic or downlink traffic that flows through the second interface. If both the remaining interface bandwidth of the PE 12 device and the configured bandwidth of the second interface are for the uplink traffic, the determined restricted interface bandwidth of the PE 11 device is also for the uplink traffic. To be specific, the restricted interface bandwidth of the PE 11 device is used to limit the rate of the uplink traffic that flows through the second interface. If both the remaining interface bandwidth of the PE 12 device and the configured bandwidth of the second interface are for the downlink traffic, the determined restricted interface bandwidth of the PE 11 device is also for the downlink traffic. To be specific, the restricted interface bandwidth of the PE 11 device is used to limit the rate of the downlink traffic that flows through the second interface.

After determining the restricted interface bandwidth of the PE 11 device, the PE 11 device may limit a user traffic rate based on the restricted interface bandwidth. Because the PE 11 device and the PE 12 device are configured to perform load balancing on user traffic, the restricted interface bandwidth that is determined by the PE 11 device based on the remaining interface bandwidth of the PE 12 device, in other words, based on a bandwidth occupation status of the PE 12 device is accurate. The PE 11 device can appropriately limit the user traffic rate based on the restricted interface bandwidth, to ensure that network resources are saved without affecting user experience.

Specifically, an operation of 202 may include the following two possible manners:
In a first possible manner, the PE 11 device determines the restricted interface bandwidth of the PE 11 device based on a sum of the remaining interface bandwidth of the PE 12 device and the configured bandwidth of the second interface.

The PE 11 device may directly use the sum of the remaining interface bandwidth of the PE 12 device and the configured bandwidth of the second interface as the restricted interface bandwidth of the PE 11 device. Alternatively the PE 11 device may multiply the sum of the remaining interface bandwidth of the PE 12 device and the configured bandwidth of the second interface by a control coefficient K₁, to obtain the restricted interface bandwidth of the PE 11 device.

The first possible manner is applicable to a dual-homing active-active scenario. In the dual-homing active-active scenario, the CE 21 device sends uplink traffic or receives downlink traffic by using the PE 11 device and the PE 12 device. Therefore, the PE 11 device can directly adjust, based on the bandwidth occupation status of the PE 12 device, bandwidth limiting configuration that takes effect in real time.

In a second possible manner, in addition to the PE 11 device and the PE 12 device, the CE 21 device is further multi-homed to other N PE devices. The PE 11 device determines an available remaining interface bandwidth based on the remaining interface bandwidth of the PE 12 device, one or more remaining interface bandwidths of the N PE devices, and a control coefficient; and the PE 11 device determines the restricted interface bandwidth of the PE 11 device based on the available remaining interface bandwidth and the configured bandwidth of the second interface.

In a period of time, each of the N PE devices may send, to the PE 11 device, a message used to advertise the bandwidth information, or only M (1≤M<N) PE devices in the N PE devices each send a message used to advertise the bandwidth information to the PE 11 device. Remaining N-M PE devices have no remaining interface bandwidth. The PE 11 device determines a total available remaining interface bandwidth of the PE 11 device based on a plurality of messages that are sent by the PE 12 device and one or more of the N PE devices and that are received in the period of time. A manner in which the PE 11 device obtains a remaining interface bandwidth of any one of the N network devices is similar to a manner in which the PE 11 device obtains the remaining interface bandwidth of the PE 12 device. Details are not described in this embodiment of this application again.

There may be one control coefficient. In this case, the control coefficient K₂ is a unified fixed value that is set by the PE 11 device for the PE 12 device and the N PE devices. Alternatively, there may be a plurality of control coefficients, and the plurality of control coefficients are in one-to-one correspondence with the PE 12 device and the N PE devices. Values of the plurality of control coefficients may be determined, for example, based on processing performance of the N PE devices. For example, if the CE 21 device is multi-homed to the PE 11 device, the PE 12 device, a PE 13 device, and a PE 14 device, and the PE 11 device receives, within a preset period of time, messages that include remaining interface bandwidths and that are sent by the PE 12 device and the PE 13 device, the PE 11 device may obtain an available remaining interface bandwidth of the PE 11 device based on (K₂₁^{∗}the remaining interface bandwidth of the PE 12 device+K₂₂^{∗}the remaining interface bandwidth of the PE 13 device), and determine a restricted interface bandwidth of the PE 11 device based on the available remaining interface bandwidth. K₂₁ is a control coefficient corresponding to the PE 12 device, and K₂₂ is a control coefficient corresponding to the PE 13 device.

For the foregoing various cases of setting the control coefficient, a value range of the control coefficient is usually greater than 0 and less than 1, or in some possible cases, may be set to another value range.

The second possible manner is applicable to a multi-homing all-active scenario. In the multi-homing all-active scenario, the CE 21 device sends uplink traffic or receives downlink traffic by performing load balancing by using the PE 11 device, the PE 12 device, and the N PE devices. Therefore, the PE 11 device may need to adjust, based on the bandwidth occupation status of the PE 12 device and bandwidth occupation statuses of the N network devices, bandwidth rate limiting configuration that takes effect in real time.

The traffic rate limiting method provided in embodiments of this application is applied to a network system. The network system includes a first network device, a second network device, and a third network device. The third network device is multi-homed to the first network device and the second network device.

The following describes a process in which the first network device limits a traffic rate.

FIG. 3 is a flowchart of a traffic rate limiting method according to an embodiment of this application. The method may be performed by a first network device, and the first network device may be, for example, the PE 11 device in FIG. 1. Refer to FIG. 3. The method includes the following steps.

301: The first network device determines a remaining interface bandwidth of a second network device.

The remaining interface bandwidth of the second network device is an unoccupied bandwidth in a configured bandwidth of a first interface. The first interface is an interface through which the second network device is connected to the third network device, for example, the interface 32 shown in FIG. 1.

The first interface is an interface used by the second network device to receive uplink traffic from the third network device or send downlink traffic to the third network device. In some cases, both the uplink traffic sent by the third network device and the downlink traffic sent to the third network device may flow through the first interface, for example, a same aggregation interface.

The configured bandwidth of the first interface is a bandwidth that is configured by the second network device for the first interface and that is used to forward traffic (uplink traffic or downlink traffic). The configured bandwidth of the first interface may be locally and statically configured by the second network device, or may be configured by another network device such as a controller and then delivered to the second network device. This is not uniquely limited in this embodiment of this application.

The remaining interface bandwidth of the second network device is a bandwidth that is currently in an unoccupied state and that is in the bandwidth configured by the second network device for the first interface, to be specific, a remaining bandwidth that is in the configured bandwidth of the first interface and that is temporarily not used to transmit traffic. Correspondingly, when the configured bandwidth of the first interface is for the uplink traffic, the remaining interface bandwidth of the second network device is also for the uplink traffic. When the configured bandwidth of the first interface is for the downlink traffic, the remaining interface bandwidth of the second network device is also for the downlink traffic.

Specifically, an operation of 301 may include the following two possible manners:
In a first possible manner, the first network device receives a message sent by the second network device, where the message includes the configured bandwidth of the first interface and a bandwidth occupied by traffic that flows through the first interface. The first network device determines the remaining interface bandwidth of the second network device based on a difference between the configured bandwidth of the first interface and the bandwidth occupied by the traffic that flows through the first interface.

When determining the remaining interface bandwidth of the second network device based on the difference between the configured bandwidth of the first interface and the bandwidth occupied by the traffic that flows through the first interface, the first network device may directly use the difference between the configured bandwidth of the first interface and the bandwidth occupied by the traffic that flows through the first interface as the remaining interface bandwidth of the second network device. Alternatively, with reference to a specific rate limiting requirement or scenario requirement, the first network device may further multiply the difference between the configured bandwidth of the first interface and the bandwidth occupied by the traffic that flows through the first interface by k, to obtain the remaining interface bandwidth of the second network device. A value range of k is usually greater than 0 and less than 1. However, in some possible cases, k may alternatively be set to another value range. k may be a fixed value statically configured by the first network device, or may be a value that is allowed to be flexibly adjusted in real time according to a specific rule. This is not uniquely limited in this embodiment of this application.

Optionally, there may be one message that includes both the configured bandwidth of the first interface and the bandwidth occupied by the traffic that flows through the first interface. In this case, the one message may be sent when the configured bandwidth of the first interface changes, or may be sent at a preset time interval. The preset time interval may be set by the second network device, may be set to a long time interval or a short time interval, and may be specifically set as required.

Alternatively, there may be two messages that may include a first message and a second message. The first message includes the configured bandwidth of the first interface. In other words, the configured bandwidth of the first interface is sent by using the first message. The second message includes the bandwidth occupied by the traffic that flows through the first interface. In other words, the bandwidth occupied by the traffic that flows through the first interface is sent by using the second message. In this case, a sending time interval of the first message is different from a sending time interval of the second message. Alternatively, the first message is sent when the configured bandwidth of the first interface changes, and the second message is sent at a preset time interval.

In a second possible manner, the first network device receives a message sent by the second network device, where the message includes the remaining interface bandwidth of the second network device.

In the foregoing two possible manners, the message may further include an ESI or an interface identifier of the first interface. The interface identifier identifies the first interface, and may be locally and statically configured by the second network device, or may be configured by the controller or the like and then delivered to the second network device. This is not uniquely limited in this embodiment of this application.

The ESI or the interface identifier of the first interface indicates the first network device to determine a second interface. The second interface is an interface through which the first network device is connected to the third network device, for example, the interface 31 shown in FIG. 1. The second interface is an interface used by the first network device to receive uplink traffic from the third network device or send downlink traffic to the third network device. In some cases, both the uplink traffic sent by the third network device and the downlink traffic sent to the third network device may flow through the second interface, for example, a same aggregation interface.

To be specific, after receiving the message, the first network device may determine, based on the ESI or the interface identifier that is of the first interface and that is in the message, the second interface corresponding to the first interface. Specifically, in an EVPN, a first network device and a second network device that have a multi-homing relationship may have a same ESI. The first network device may determine, based on the ESI, a first interface that is in the first network device and that is used to connect to a third network device. The second network device may determine, based on the ESI, a second interface that is in the second network device and that is used to connect to the third network device. However, in a non-EVPN network, corresponding interface identifiers may be separately allocated to a first network device and a second network device, and an interface identifier identifying a first interface is carried in a message sent by the second network device, so that the first network device determines a second interface corresponding to the interface identifier of the first interface. The interface identifier of the first interface may be the same as an interface identifier of the second interface, or the interface identifier of the first interface may have a correspondence with an interface identifier of the second interface. In this way, the first network device can subsequently set a bandwidth of the second interface based on a remaining interface bandwidth of the second network device (namely, a remaining bandwidth of the first interface).

The first interface and the second interface correspond to each other, and both the first interface and the second interface are configured to forward uplink traffic sent by the third network device or forward downlink traffic sent to the third network device.

In the EVPN, the message in the foregoing two possible manners may further include an Ethernet tag of the first interface, and the ESI of the first interface and the Ethernet tag jointly indicate the first network device to determine the second interface. In some possible cases, the Ethernet tag may be a VLAN ID. For example, the first network device may determine an aggregation interface based on the ESI, where the aggregation interface includes one or more sub-interfaces. The first network device may determine, based on the received VLAN ID, a sub-interface of the aggregation interface as the second interface. In a possible specific implementation, when the first interface corresponds to a unique VLAN, the VLAN ID may be an identifier of the unique VLAN determined by the second network device. When the first interface corresponds to a plurality of VLANs, the VLAN ID may be an identifier of one of the VLANs (for example, a VLAN with a maximum or minimum identifier value in the plurality of VLANs) determined by the second network device from the plurality of VLANs.

In the non-EVPN, the message in the foregoing two possible manners may further include a VLAN identifier corresponding to the first interface, where a manner of determining the VLAN identifier is similar to the foregoing manner of determining the VLAN ID in the EVPN. After receiving the VLAN identifier and the interface identifier that are of the first interface and that are sent by the second network device, the first network device may determine, based on the interface identifier and the VLAN identifier that are of the first interface, the second interface corresponding to the first interface. When the second network device does not send the VLAN identifier, for example, a corresponding interface may be uniquely determined by using only the interface identifier in a static configuration manner. When the second network device further sends the VLAN identifier in addition to the interface identifier, interfaces belonging to different VLANs may be allowed to have a same interface identifier. In this case, a corresponding interface needs to be determined by using the interface identifier and the VLAN identifier together.

Optionally, in the foregoing two possible manners, the message may further include traffic direction information. The traffic direction information indicates whether the configured bandwidth of the first interface and the bandwidth occupied by the traffic flowing through the first interface that are carried in the message are bandwidth information of uplink traffic that flows through the first interface or bandwidth information of downlink traffic that flows through the first interface. Alternatively, the traffic direction information indicates whether the remaining interface bandwidth carried in the message is bandwidth information of uplink traffic that flows through the first interface or bandwidth information of downlink traffic that flows through the first interface.

When the traffic direction information indicates that the message carries the bandwidth information of the uplink traffic, the remaining interface bandwidth that is of the second network device and that is determined by the first network device based on the message is also for the uplink traffic. Correspondingly, a bandwidth that is of the second interface and that is used to forward the uplink traffic is subsequently configured. When the traffic direction information indicates that the message carries the bandwidth information of the downlink traffic, the remaining interface bandwidth that is of the second network device and that is determined by the first network device based on the message is also for the downlink traffic. Correspondingly, a bandwidth that is of the second interface and that is used to forward the downlink traffic is subsequently configured.

The message in the foregoing two possible manners may be a BGP route, or may be another message that can carry bandwidth information. This is not uniquely limited in this embodiment of this application.

In this embodiment of this application, the bandwidth information (the configured bandwidth of the first interface, the bandwidth occupied by the traffic that flows through the first interface, or the remaining interface bandwidth of the second network device) may be carried by adding a new BGP route type or adding a new extended community attribute.

Optionally, in a scenario such as the EVPN, the bandwidth information may exist in an NLRI attribute in the BGP route. For example, fields included in the NLRI attribute may be shown in Table 1.

Optionally, the bandwidth information may alternatively exist in an extended community attribute of the BGP route, for example, may be used in the non-EVPN network scenario. For example, fields included in the extended community attribute may be shown in Table 2.

302: The first network device determines a restricted interface bandwidth of the first network device based on the remaining interface bandwidth of the second network device and a configured bandwidth of the second interface.

The configured bandwidth of the second interface is a bandwidth that is configured by the first network device for the second interface and that is used to forward traffic (uplink traffic or downlink traffic). The configured bandwidth of the second interface may be locally and statically configured by the first network device, or may be configured by another network device such as the controller and then delivered to the first network device.

The restricted interface bandwidth of the first network device is used to limit a rate of traffic that flows through the second interface, and may be specifically used to limit a rate of the uplink traffic or the downlink traffic that flows through the second interface. If both the remaining interface bandwidth of the second network device and the configured bandwidth of the second interface are for the uplink traffic, the determined restricted interface bandwidth of the first network device is also for the uplink traffic. To be specific, the restricted interface bandwidth of the first network device is used to limit the rate of the uplink traffic that flows through the second interface. If both the remaining interface bandwidth of the second network device and the configured bandwidth of the second interface are for the downlink traffic, the determined restricted interface bandwidth of the first network device is also for the downlink traffic. To be specific, the restricted interface bandwidth of the first network device is used to limit the rate of the downlink traffic that flows through the second interface.

After determining the restricted interface bandwidth of the first network device, the first network device may limit a user traffic rate based on the restricted interface bandwidth. Because the first network device and the second network device are configured to perform load balancing on user traffic, the restricted interface bandwidth that is determined by the first network device based on the remaining interface bandwidth of the second network device, in other words, based on a bandwidth occupation status of the second network device is accurate. The first network device can appropriately limit the user traffic rate based on the restricted interface bandwidth, to save network resources without affecting user experience.

Specifically, an operation of 302 may include the following two possible manners:
In a first possible manner, the first network device determines the restricted interface bandwidth of the first network device based on a sum of the remaining interface bandwidth of the second network device and the configured bandwidth of the second interface.

The first network device may directly use the sum of the remaining interface bandwidth of the second network device and the configured bandwidth of the second interface as the restricted interface bandwidth of the first network device. Alternatively, the first network device may multiply the sum of the remaining interface bandwidth of the second network device and the configured bandwidth of the second interface by a control coefficient K₁, to obtain the restricted interface bandwidth of the first network device.

The first possible manner is applicable to a dual-homing active-active scenario. In the dual-homing active-active scenario, the third network device sends uplink traffic or receives downlink traffic by using the first network device and the second network device. Therefore, the first network device can directly adjust, based on the bandwidth occupation status of the second network device, bandwidth limiting configuration that takes effect in real time.

In a second possible manner, in addition to the first network device and the second network device, the third network device is further multi-homed to other N network devices. The first network device determines an available remaining interface bandwidth based on the remaining interface bandwidth of the second network device, one or more remaining interface bandwidths of the N network devices, and a control coefficient; and the first network device determines the restricted interface bandwidth of the first network device based on the available remaining interface bandwidth and the configured bandwidth of the second interface.

In a period of time, each of the N network devices may send, to the first network device, a message used to advertise the bandwidth information, or only M (1≤M<N) network devices in the N network devices each send, to the first network device, a message used to advertise the bandwidth information, and remaining N-M network devices have no remaining interface bandwidth. The first network device determines a total available remaining interface bandwidth of the first network device based on a plurality of messages that are sent by the second network device and one or more of the N network devices and that are received within the period of time. A manner in which the first network device obtains a remaining interface bandwidth of any one of the N network devices is similar to a manner in which the first network device obtains the remaining interface bandwidth of the second network device. Details are not described in this embodiment of this application again.

The control coefficient may be a unified fixed value that is set by the first network device for the second network device and the N network devices. Alternatively, there may be a plurality of control coefficients, and the plurality of control coefficients are in one-to-one correspondence with the second network device and the N network devices. For example, if the third network device is multi-homed to the first network device, the second network device, a fourth network device, and a fifth network device, and the first network device receives, within a preset period of time, messages that include remaining interface bandwidths and that are sent by the second network device and the fourth network device, the first network device may obtain an available remaining interface bandwidth of the first network device according to (K₂₁^{∗}the remaining interface bandwidth of the second network device+K₂₂^{∗}the remaining interface bandwidth of the fourth network device), and determine a restricted interface bandwidth of the first network device based on the available remaining interface bandwidth. K₂₁ is a control coefficient corresponding to the second network device, and K₂₂ is a control coefficient corresponding to the fourth network device.

A value range of the control coefficient is usually greater than 0 and less than 1, or in some possible cases, may be set to another value range.

The second possible manner is applicable to a multi-homing all-active scenario. In the multi-homing all-active scenario, the third network device sends uplink traffic or receives downlink traffic by performing load balancing by using the first network device, the second network device, and the other N network devices. Therefore, the first network device may need to adjust, based on the bandwidth occupation status of the second network device and bandwidth occupation statuses of the N network devices, bandwidth limiting configuration that takes effect in real time.

The following describes a process in which the second network device limits a traffic rate.

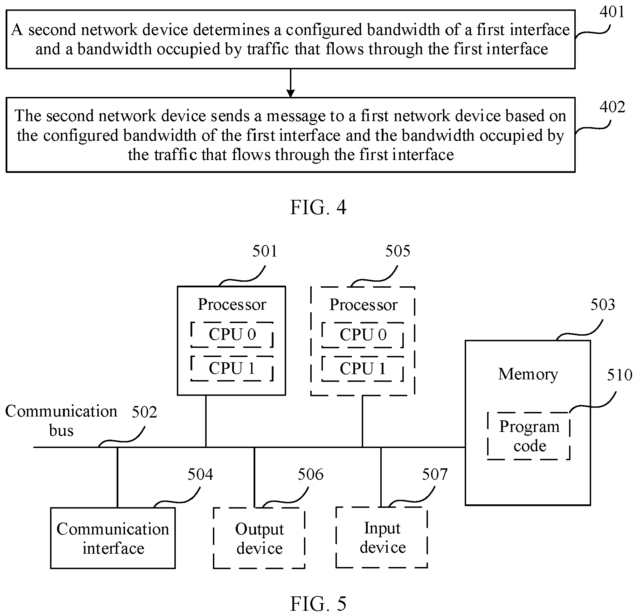

FIG. 4 is a flowchart of a traffic rate limiting method according to an embodiment of this application. The method may be performed by a second network device, and the second network device may be, for example, the PE 12 device in FIG. 1. Refer to FIG. 4. The method includes the following steps.

401: A second network device determines a configured bandwidth of a first interface and a bandwidth occupied by traffic that flows through the first interface.

The first interface and the configured bandwidth of the first interface have been described in 301. Details are not described in this embodiment of this application again.

402: The second network device sends a message to the first network device based on the configured bandwidth of the first interface and the bandwidth occupied by the traffic that flows through the first interface.

The message indicates the first network device to limit a traffic rate of the third network device based on the message, in other words, indicates the first network device to limit, based on the message, a rate of traffic that flows through a second interface. The second interface has been described in 302. Details are not described in this embodiment of this application again.

When sending the message to the first network device, the second network device may directly send the message to the first network device, or may send the message to the first network device by using another network device such as an RR. This is not uniquely limited in this embodiment of this application.

The message includes the configured bandwidth of the first interface and the bandwidth occupied by the traffic that flows through the first interface. Alternatively, the message includes a remaining interface bandwidth of the second network device, and the remaining interface bandwidth of the second network device is an unoccupied bandwidth in the configured bandwidth of the first interface. The remaining interface bandwidth of the second network device has been described in 302. Details are not described in this embodiment of this application again.

When the message includes the configured bandwidth of the first interface and the bandwidth occupied by the traffic that flows through the first interface, there may be one message, and the one message includes both the configured bandwidth of the first interface and the bandwidth occupied by the traffic that flows through the first interface. In this case, the one message may be sent when the configured bandwidth of the first interface changes, or may be sent at a preset time interval. The preset time interval may be set by the second network device, may be set to a long time interval or a short time interval, and may be specifically set as required. Alternatively, there may be two messages that may include a first message and a second message. The first message includes the configured bandwidth of the first interface. In other words, the configured bandwidth of the first interface is sent by using the first message. The second message includes the bandwidth occupied by the traffic that flows through the first interface. In other words, the bandwidth occupied by the traffic that flows through the first interface is sent by using the second message. In this case, a sending time interval of the first message is different from a sending time interval of the second message. Alternatively, the first message is sent when the configured bandwidth of the first interface changes, and the second message is sent at a preset time interval.

When the message includes the remaining interface bandwidth of the second network device, the second network device may subtract, from the configured bandwidth of the first interface, the bandwidth occupied by the traffic that flows through the first interface, to obtain the remaining interface bandwidth of the second network device.

Optionally, the message may further include an ESI or an interface identifier of the first interface. Further, the message may further include an Ethernet tag of the first interface or a VLAN identifier corresponding to the first interface. Optionally, the message may further include traffic direction information. Related content has been described in 301. Details are not described in this embodiment of this application again.

In addition, the message may be a BGP route, or may be another message that can carry bandwidth information. This is not uniquely limited in this embodiment of this application. In this embodiment of this application, the bandwidth information (the configured bandwidth of the first interface, the bandwidth occupied by the traffic that flows through the first interface, or the remaining interface bandwidth of the second network device) may be carried by adding a new BGP route type or adding a new extended community attribute. Related content has been described in 301. Details are not described in this embodiment of this application again.

In this embodiment of this application, the second network device may send the configured bandwidth of the first interface and the bandwidth occupied by the traffic that flows through the first interface to the first network device, or may send the remaining interface bandwidth of the second network device to the first network device. Therefore, the first network device can learn of a bandwidth occupation status of the second network device. Because the first network device and the second network device are configured to perform load balancing on user traffic, the first network device can appropriately limit a user traffic rate of the third network device based on the bandwidth occupation status of the second network device, to save network resources without affecting user experience.

FIG. 5 is a schematic diagram of a structure of a network device according to an embodiment of this application. The network device may be the PE 11 device or the PE 12 device shown in FIG. 1, or may be the first network device or the second network device in embodiments in FIG. 3 to FIG. 4. Refer to FIG. 5. The network device may include at least one processor 501 and at least one communication interface 504. The network device may further include a communication bus 502 and a memory 503.

The processor 501 may be a microprocessor (including a central processing unit (central processing unit, CPU) or the like), an application-specific integrated circuit (application-specific integrated circuit, ASIC), or one or more integrated circuits configured to control program execution of the solutions of this application.

The communication interface 504 is applicable to any apparatus such as a transceiver, and is configured to communicate with another device or communication network, such as the Ethernet, a radio access network (radio access network, RAN), or a wireless local area network (wireless local area network, WLAN). The communication interface 504 may be configured to receive or send data for communication with another device, for example, receive a packet sent by another device, or send an interface identifier generated by the network device to another device.

The memory 503 may be a read-only memory (read-only memory, ROM), a random access memory (random access memory, RAM), an electrically erasable programmable read-only memory (electrically erasable programmable read-Only memory, EEPROM), an optical disc (including a compact disc read-only memory (compact disc read-only memory, CD-ROM), a compact disc, a laser disc, a digital versatile disc, a Blu-ray disc, and the like), a magnetic disk storage medium, another magnetic storage device, or any other medium that can be used to carry or store expected program code in a form of an instruction or a data structure and that can be accessed by a computer, but is not limited thereto. The memory 503 may exist independently, and is connected to the processor 501 through the communication bus 502. The memory 503 may alternatively be integrated with the processor 501.

The communication bus 502 may include a path for transferring information between the foregoing components.

During specific implementation, in an embodiment, the processor 501 may include one or more CPUs, for example, a CPU 0 and a CPU 1 shown in FIG. 5.

During specific implementation, in an embodiment, the network device may include a plurality of processors, for example, the processor 501 and a processor 505 shown in FIG. 5. Each of the processors may be a single-core processor, or may be a multi-core processor. The processor herein may refer to one or more devices, circuits, and/or processing cores configured to process data (such as computer program instructions).

During specific implementation, in an embodiment, the network device may further include an output device 506 and an input device 507. The output device 506 communicates with the processor 501, and may display information in a plurality of manners. For example, the output device 506 may be a liquid crystal display (liquid crystal display, LCD), a light emitting diode (light emitting diode, LED) display device, a cathode ray tube (cathode ray tube, CRT) display device, or a projector (projector). The input device 507 communicates with the processor 501, and may receive a user input in a plurality of manners. For example, the input device 507 may be a mouse, a keyboard, a touchscreen device, or a sensor device.

The network device may be, for example, a router, a switch, a PE device, a network server, or a desktop computer, or may be another type of communication device or embedded device. A type of the network device is not particularly limited in embodiments of this application.

When the network device includes the memory 503, the memory 503 is configured to store program code 510 for executing the solutions of this application, and the processor 501 is configured to execute the program code 510 stored in the memory 503. The network device may implement, by using the processor 501 and the program code 510 in the memory 503, an operation performed by the first network device or the second network device in the foregoing embodiments. In another implementation form, a memory may alternatively exist independently of the network device. When running, the network device may invoke program code stored in the memory, to implement an operation performed by the first network device or the second network device in the foregoing embodiment.

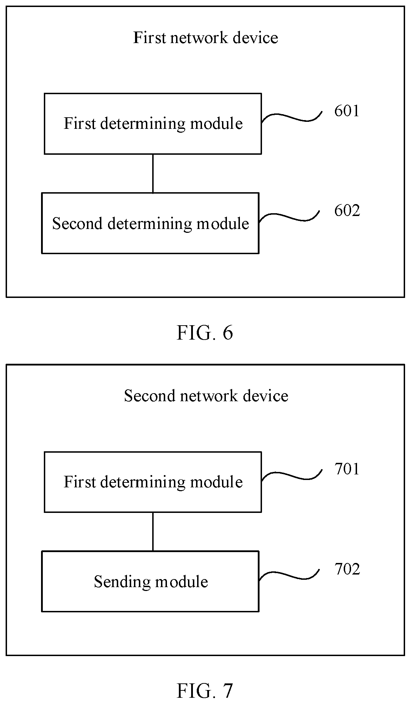

FIG. 6 is a schematic diagram of a structure of a first network device according to an embodiment of this application. The first network device may be implemented by software, hardware, or a combination thereof. The first network device may be the network device shown in FIG. 5. The first network device is applied to a network system, the network system includes the first network device, a second network device, and a third network device, and the third network device is multi-homed to the first network device and the second network device.

Refer to FIG. 6. The first network device includes a first determining module 601 and a second determining module 602.

The first determining module 601 is configured to determine a remaining interface bandwidth of the second network device, where the remaining interface bandwidth of the second network device is an unoccupied bandwidth in a configured bandwidth of a first interface, and the first interface is an interface through which the second network device is connected to the third network device.

The second determining module 602 is configured to determine a restricted interface bandwidth of the first network device based on the remaining interface bandwidth of the second network device and a configured bandwidth of a second interface, where the restricted interface bandwidth is used to limit a rate of traffic that flows through the second interface, and the second interface is an interface through which the first network device is connected to the third network device.

Optionally, the first determining module 601 is configured to:
receive a message sent by the second network device, where the message includes the configured bandwidth of the first interface and a bandwidth occupied by traffic that flows through the first interface; and
determine the remaining interface bandwidth of the second network device based on a difference between the configured bandwidth of the first interface and the bandwidth occupied by the traffic that flows through the first interface.

Optionally, the first determining module 601 is configured to:
receive a message sent by the second network device, where the message includes the remaining interface bandwidth of the second network device.

Optionally, the message further includes an ESI or an interface identifier of the first interface, and the ESI or the interface identifier indicates the first network device to determine the second interface.

Optionally, the message further includes an Ethernet tag of the first interface, and the ESI and the Ethernet tag indicate the first network device to determine the second interface.

Optionally, the message is a BGP route.

Optionally, the message includes a first message and a second message, the configured bandwidth of the first interface is sent by using the first message, and the bandwidth occupied by the traffic that flows through the first interface is sent by using the second message.

Optionally, a sending time interval of the first message is different from a sending time interval of the second message. Alternatively, the first message is sent when the configured bandwidth of the first interface changes, and the second message is sent at a preset time interval.

Optionally, the second determining module 602 is configured to:
determine the restricted interface bandwidth of the first network device based on a sum of the remaining interface bandwidth of the second network device and the configured bandwidth of the second interface.

Optionally, in addition to the first network device and the second network device, the third network device is further multi-homed to other N network devices, where N is a positive integer. The second determining module 602 is configured to:
determine an available remaining interface bandwidth based on the remaining interface bandwidth of the second network device, one or more remaining interface bandwidths of the other N network devices, and a control coefficient, where the control coefficient is greater than 0 and less than 1; and
determine the restricted interface bandwidth of the first network device based on the available remaining interface bandwidth and the configured bandwidth of the second interface.

Optionally, the restricted interface bandwidth is used to limit a rate of uplink traffic or downlink traffic that flows through the second interface.

Optionally, the message further includes traffic direction information.

The traffic direction information indicates that the configured bandwidth of the first interface and the bandwidth occupied by the traffic flowing through the first interface that are carried in the message are bandwidth information of uplink traffic that flows through the first interface or bandwidth information of downlink traffic that flows through the first interface.

Alternatively, the traffic direction information indicates that the remaining interface bandwidth carried in the message is bandwidth information of uplink traffic that flows through the first interface or bandwidth information of downlink traffic that flows through the first interface.

In this embodiment of this application, the first network device determines the restricted interface bandwidth of the first network device based on the remaining interface bandwidth of the second network device and the configured bandwidth of the second interface. Subsequently, the first network device may limit a user traffic rate based on the restricted interface bandwidth. Because the first network device and the second network device are configured to perform load balancing on user traffic, the restricted interface bandwidth that is determined by the first network device based on the remaining interface bandwidth of the second network device, in other words, based on a bandwidth occupation status of the second network device is accurate. The first network device can appropriately limit the user traffic rate based on the restricted interface bandwidth, to ensure that network resources are saved without affecting user experience.

It should be noted that, when the first network device provided in the foregoing embodiment limits a traffic rate, division of the foregoing functional modules is only used as an example for description. In an actual application, the foregoing functions may be allocated to different functional modules for implementation as required. In other words, an internal structure of the apparatus is divided into different functional modules to implement all or some of the functions described above. In addition, the first network device provided in the foregoing embodiment and embodiments of the traffic rate limiting method belong to a same concept. For a specific implementation process, refer to the method embodiments. Details are not described herein again.

FIG. 7 is a schematic diagram of a structure of a second network device according to an embodiment of this application. The second network device may be implemented by software, hardware, or a combination thereof. The second network device may be the network device shown in FIG. 5. The second network device is applied to a network system. The network system includes a first network device, the second network device, and a third network device, and the third network device is multi-homed to the first network device and the second network device.

Refer to FIG. 7. The second network device includes: a first determining module 701 and a sending module 702.

The first determining module 701 is configured to determine a configured bandwidth of a first interface and a bandwidth occupied by traffic that flows through the first interface, where the first interface is an interface through which the second network device is connected to the third network device.

The sending module 702 is configured to send a message to the first network device based on the configured bandwidth of the first interface and the bandwidth occupied by the traffic that flows through the first interface, where the message indicates the first network device to limit a traffic rate of the third network device based on the message. The message includes the configured bandwidth of the first interface and the bandwidth occupied by the traffic that flows through the first interface. Alternatively, the message includes a remaining interface bandwidth of the second network device, and the remaining interface bandwidth of the second network device is an unoccupied bandwidth in the configured bandwidth of the first interface.

Optionally, the message further includes an ESI or an interface identifier of the first interface, the ESI or the interface identifier indicates the first network device to determine a second interface, and the second interface is an interface through which the first network device is connected to the third network device.

Optionally, the message further includes an Ethernet tag of the first interface, and the ESI and the Ethernet tag indicate the first network device to determine the second interface.

Optionally, the message further includes traffic direction information. The traffic direction information indicates that the configured bandwidth of the first interface and the bandwidth occupied by the traffic flowing through the first interface that are carried in the message are bandwidth information of uplink traffic that flows through the first interface or bandwidth information of downlink traffic that flows through the first interface.

Alternatively, the traffic direction information indicates that the remaining interface bandwidth carried in the message is bandwidth information of uplink traffic that flows through the first interface or bandwidth information of downlink traffic that flows through the first interface.

Optionally, the message is a BGP route.

Optionally, the message includes a first message and a second message, the configured bandwidth of the first interface is sent by using the first message, and the bandwidth occupied by the traffic that flows through the first interface is sent by using the second message.

Optionally, a sending time interval of the first message is different from a sending time interval of the second message. Alternatively, the first message is sent when the configured bandwidth of the first interface changes, and the second message is sent at a preset time interval.

In this embodiment of this application, the second network device may send the configured bandwidth of the first interface and the bandwidth occupied by the traffic that flows through the first interface to the first network device, or may send the remaining interface bandwidth of the second network device to the first network device. Therefore, the first network device can learn of a bandwidth occupation status of the second network device. Because the first network device and the second network device are configured to perform load balancing on user traffic, the first network device can appropriately limit a user traffic rate of the third network device based on the bandwidth occupation status of the second network device, to ensure that network resources are saved without affecting user experience.

It should be noted that, when the second network device provided in the foregoing embodiment limits a traffic rate, division of the foregoing functional modules is only used as an example for description. In an actual application, the foregoing functions may be allocated to different functional modules for implementation as required. In other words, an internal structure of the apparatus is divided into different functional modules to implement all or some of the functions described above. In addition, the second network device provided in the foregoing embodiment and embodiments of the traffic rate limiting method belong to a same concept. For a specific implementation process, refer to the method embodiments. Details are not described herein again.

All or some of the foregoing embodiments may be implemented by using software, hardware, firmware, or any combination thereof. When software is used to implement the foregoing embodiments, all or some of the foregoing embodiments may be implemented in a form of a computer program product. The computer program product includes one or more computer instructions. When the computer instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (Digital Subscriber Line, DSL)) or wireless (for example, infrared, radio, and microwave, or the like) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a digital versatile disc (Digital Versatile Disc, DVD)), a semiconductor medium (for example, a solid-state drive (Solid-State Drive, SSD)), or the like.

The foregoing descriptions are only embodiments of this application, but are not intended to limit this application. Any modification, equivalent replacement, or improvement made without departing from the spirit and principle of this application should fall within the protection scope of this application.

## Claims

1. A traffic rate limiting method, applied to a network system, wherein the network system comprises a first network device, a second network device, and a third network device, the third network device is multi-homed to the first network device and the second network device, and the method comprises:
determining, by the first network device, a remaining interface bandwidth of the second network device, wherein the remaining interface bandwidth of the second network device is an unoccupied bandwidth in a configured bandwidth of a first interface, and the first interface is an interface through which the second network device is connected to the third network device; and
determining, by the first network device, a restricted interface bandwidth of the first network device based on the remaining interface bandwidth of the second network device and a configured bandwidth of a second interface, wherein the restricted interface bandwidth is used to limit a rate of traffic that flows through the second interface, and the second interface is an interface through which the first network device is connected to the third network device.

2. The method according to claim 1, wherein the determining, by the first network device, a remaining interface bandwidth of the second network device comprises:
receiving, by the first network device, a message sent by the second network device, wherein the message comprises the configured bandwidth of the first interface and a bandwidth occupied by traffic that flows through the first interface; and
determining, by the first network device, the remaining interface bandwidth of the second network device based on a difference between the configured bandwidth of the first interface and the bandwidth occupied by the traffic that flows through the first interface.

3. The method according to claim 1, wherein the determining, by the first network device, a remaining interface bandwidth of the second network device comprises:
receiving, by the first network device, a message sent by the second network device, wherein the message comprises the remaining interface bandwidth of the second network device.

4. The method according to claim 2 or 3, wherein the message further comprises an Ethernet segment identifier ESI or an interface identifier of the first interface, and the ESI or the interface identifier indicates the first network device to determine the second interface.

5. The method according to claim 4, wherein the message further comprises an Ethernet tag of the first interface, and the ESI and the Ethernet tag indicate the first network device to determine the second interface.

6. The method according to any one of claims 2 to 5, wherein the message is a border gateway protocol BGP route.

7. The method according to claim 2, wherein the message comprises a first message and a second message, the configured bandwidth of the first interface is sent by using the first message, and the bandwidth occupied by the traffic that flows through the first interface is sent by using the second message.

8. The method according to claim 7, wherein a sending time interval of the first message is different from a sending time interval of the second message; or the first message is sent when the configured bandwidth of the first interface changes, and the second message is sent at a preset time interval.

9. The method according to any one of claims 1 to 8, wherein the determining, by the first network device, a restricted interface bandwidth of the first network device based on the remaining interface bandwidth of the second network device and a configured bandwidth of a second interface comprises:
determining, by the first network device, the restricted interface bandwidth of the first network device based on a sum of the remaining interface bandwidth of the second network device and the configured bandwidth of the second interface.

10. The method according to any one of claims 1 to 8, wherein, in addition to the first network device and the second network device, the third network device is further multi-homed to other N network devices, N is a positive integer, and the determining, by the first network device, a restricted interface bandwidth of the first network device based on the remaining interface bandwidth of the second network device and a configured bandwidth of a second interface comprises:
determining, by the first network device, an available remaining interface bandwidth based on the remaining interface bandwidth of the second network device, one or more remaining interface bandwidths of the other N network devices, and a control coefficient, wherein the control coefficient is greater than 0 and less than 1; and
determining, by the first network device, the restricted interface bandwidth of the first network device based on the available remaining interface bandwidth and the configured bandwidth of the second interface.

11. The method according to any one of claims 1 to 10, wherein the restricted interface bandwidth is used to limit a rate of uplink traffic or downlink traffic that flows through the second interface.

12. The method according to claim 2 or 3, wherein the message further comprises traffic direction information, wherein
the traffic direction information indicates that the configured bandwidth of the first interface and the bandwidth occupied by the traffic flowing through the first interface that are carried in the message are bandwidth information of uplink traffic that flows through the first interface or bandwidth information of downlink traffic that flows through the first interface; or
the traffic direction information indicates that the remaining interface bandwidth carried in the message is bandwidth information of uplink traffic that flows through the first interface or bandwidth information of downlink traffic that flows through the first interface.

13. A traffic rate limiting method, applied to a network system, wherein the network system comprises a first network device, a second network device, and a third network device, the third network device is multi-homed to the first network device and the second network device, and the method comprises:
determining, by the second network device, a configured bandwidth of a first interface and a bandwidth occupied by traffic that flows through the first interface, wherein the first interface is an interface through which the second network device is connected to the third network device; and
sending, by the second network device, a message to the first network device based on the configured bandwidth of the first interface and the bandwidth occupied by the traffic that flows through the first interface, wherein the message indicates the first network device to limit a traffic rate of the third network device based on the message; and the message comprises the configured bandwidth of the first interface and the bandwidth occupied by the traffic that flows through the first interface; or the message comprises a remaining interface bandwidth of the second network device, and the remaining interface bandwidth of the second network device is an unoccupied bandwidth in the configured bandwidth of the first interface.

14. The method according to claim 13, wherein the message further comprises an Ethernet segment identifier ESI or an interface identifier of the first interface, the ESI or the interface identifier indicates the first network device to determine a second interface, and the second interface is an interface through which the first network device is connected to the third network device.

15. The method according to claim 14, wherein the message further comprises an Ethernet tag of the first interface, and the ESI and the Ethernet tag indicate the first network device to determine the second interface.

16. The method according to any one of claims 13 to 15, wherein the message further comprises traffic direction information, and the traffic direction information indicates that the configured bandwidth of the first interface and the bandwidth occupied by the traffic flowing through the first interface that are carried in the message are bandwidth information of uplink traffic that flows through the first interface or bandwidth information of downlink traffic that flows through the first interface; or
the traffic direction information indicates that the remaining interface bandwidth carried in the message is bandwidth information of uplink traffic that flows through the first interface or bandwidth information of downlink traffic that flows through the first interface.

17. The method according to any one of claims 13 to 16, wherein the message is a border gateway protocol BGP route.

18. The method according to claim 13, wherein the message comprises a first message and a second message, the configured bandwidth of the first interface is sent by using the first message, and the bandwidth occupied by the traffic that flows through the first interface is sent by using the second message.

19. The method according to claim 18, wherein a sending time interval of the first message is different from a sending time interval of the second message; or the first message is sent when the configured bandwidth of the first interface changes, and the second message is sent at a preset time interval.

20. A first network device, wherein the first network device comprises a processor and a memory, the memory is configured to store a computer program, and the processor is configured to invoke the computer program stored in the memory, to enable the first network device to perform the method according to any one of claims 1 to 12.

21. A second network device, wherein the second network device comprises a processor and a memory, the memory is configured to store a computer program, and the processor is configured to invoke the computer program stored in the memory, to enable the second network device to perform the method according to any one of claims 13 to 19.

22. A computer-readable storage medium, wherein the computer-readable storage medium stores instructions; and when the instructions are run on a computer, the computer is enabled to perform the method according to any one of claims 1 to 19.
